# EUROPÄISCHE PATENTANMELDUNG

(11) **EP 3 438 772 A1**
(43) Veröffentlichungstag der Anmeldung: **06.02.2019**
(21) Anmeldenummer: 17184345.1
(22) Anmeldetag: 01.08.2017
(51) Int. Cl.: G05B 19/404, B30B 15/14

(54) **NACHLAUFMESSUNG INKLUSIVE NACHJUSTIERUNG HINSICHTLICH BREMSSTEUERUNG FÜR PRESSENSTEUERUNGEN**

(71) Anmelder: Wieland Electric GmbH, 96052 Bamberg (DE)
(72) Erfinder: Uygur, Sinan, 91301 Forchheim (DE)
(74) Vertreter: 2K Patentanwälte Blasberg Kewitz & Reichel

(57) **Zusammenfassung**

Ein Verfahren (20) zur Steuerung einer Maschine (1), bei der ein erstes Maschinenteil (2) aus einer Ruheposition eine Arbeitsbewegung gegen ein zweites Maschinenteil (4) ausführt und zum Wiedererreichen der Ruheposition die Arbeitsbewegung abgebremst wird, wobei das Abbremsen mittels Betätigung einer Bremsvorrichtung (14) durch eine Steuerungseinheit (16) an einem Auslösepunkt erfolgt, soll einen besonders wartungsarmen und dennoch sicheren Betrieb der Maschine ermöglichen. Dazu wird eine Soll-Ruheposition vorgegeben (22), und zyklisch während der Arbeitsbewegungen ermittelt die Steuerungseinheit (16) eine Ist-Ruheposition nach dem Abbremsen (24), und anhand einer Positionsdifferenz zwischen Soll-Ruheposition und Ist-Ruheposition wird durch die Steuerungseinheit der Auslösepunkt korrigiert (26, 28).

## Beschreibung

Die Erfindung betrifft ein Verfahren zur Steuerung einer Maschine, bei der ein erstes Maschinenteil aus einer Ruheposition eine Arbeitsbewegung gegen ein zweites Maschinenteil ausführt und zum Wiedererreichen der Ruheposition die Arbeitsbewegung abgebremst wird, wobei das Abbremsen mittels Betätigung einer Bremsvorrichtung durch eine Steuerungseinheit an einem Auslösepunkt erfolgt. Sie betrifft weiter eine Steuerungseinheit für eine derartige Maschine.

Eine derartige Maschine ist beispielsweise eine Biegepresse, Abkantpresse, Stanzmaschine oder Schneidemaschine, bei der zwei Maschinenteile aufeinander zu bewegt werden. Der Antrieb ist dabei häufig als Exzenter- oder Kurbelantrieb aufgebaut, bei dem die Drehbewegung des Exzenterrades über einen Pleuel in eine Linearbewegung umgewandelt wird. Es sind aber auch andere Antriebsarten für derartige Maschinen bekannt. In der Regel beginnt dabei die Linearbewegung des angetriebenen, ersten Maschinenteils, z.B. des Pressenstößels in einer Ruheposition, indem der Antrieb eingekuppelt wird. Der Stößel führt dann die lineare Arbeitsbewegung aus und kehrt wieder in die Ruheposition zurück. Dabei wird der Antrieb wieder ausgekuppelt und der Stößel durch Betätigung einer Bremsvorrichtung - üblicherweise federkraftbetätigte Bremsen - wieder abgebremst, so dass die Ruheposition erreicht wird.

Die Bremsvorrichtung wird dazu in der Regel an einem definierten Auslösepunkt im Laufe der Arbeitsbewegung ausgelöst, z.B. zu einem bestimmten Zeitpunkt oder bei einem bestimmten Drehwinkel des Exzenterrades. Dieser Auslösepunkt wird bei der Inbetriebnahme der Maschine festgelegt. Da die Bremsen über die Betriebsdauer hinweg aber ihre Bremskraft ändern können, da sie z.B. einem gewissen Verschleiß unterliegen, muss der Auslösepunkt bei der Wartung der Maschine häufig nachjustiert werden. Dies ist vergleichsweise aufwändig.

Es ist daher Aufgabe der Erfindung, ein Verfahren der eingangs genannten Art anzugeben, welches einen besonders wartungsarmen und dennoch sicheren Betrieb der Maschine ermöglicht.

Diese Aufgabe wird erfindungsgemäß gelöst, indem eine Soll-Ruheposition vorgegeben wird, und zyklisch während der Arbeitsbewegungen die Steuerungseinheit eine Ist-Ruheposition nach dem Abbremsen ermittelt, und anhand einer Positionsdifferenz zwischen Soll-Ruheposition und Ist-Ruheposition durch die Steuerungseinheit der Auslösepunkt korrigiert wird.

Die Erfindung geht dabei von der Überlegung aus, dass im Rahmen der funktional sicheren Steuerung und Überwachung einer eingangs genannten Maschine, die zur Unfallverhütung häufig durchgeführt wird, bereits eine technische Möglichkeit vorhanden ist, die Ruhestellung der Maschine nach der Arbeitsbewegung zu überwachen, z.B. im Rahmen einer Kontaktüberwachung am oberen oder unteren Totpunkt. Die Informationen derartiger Systeme sollten daher in der Art einer Doppelnutzung in der Steuerung neben den Sicherheitsaspekten zusätzlich dazu verwendet werden, um die Ist-Ruheposition des die Arbeitsbewegung ausführenden Maschinenteils nach der Arbeitsbewegung zu ermitteln. Aus einer Positionsdifferenz zwischen vordefinierter Soll- und aktueller Ist-Position kann dann einer Korrektur für den Auslösepunkt errechnet werden. Wird dieser Vorgang zyklisch, d.h. z.B. während jedes Arbeitszyklus oder in regelmäßigen Abständen durchgeführt, wird sichergestellt, dass die Bremswirkung stets so einsetzt, dass die Maschine in der korrekten Soll-Ruheposition anhält. Dadurch entfällt die Notwendigkeit einer manuellen Justage.

In einer ersten vorteilhaften Ausgestaltung des Verfahrens erfolgt das Korrigieren, indem aus der Positionsdifferenz eine Richtung des Korrigierens des Auslösepunkts ermittelt wird und die der Auslösepunkt um einen festen, vorbestimmten Korrekturwert in die ermittelte Richtung verschoben wird. Mit anderen Worten: Es wird eine feste Schrittgröße für die Korrekturen vorgegeben und nur die Richtung der Korrektur ermittelt. Die Richtung der Positionsdifferenz kann allgemein positiv oder negativ sein, wird aber, da sich durch einen Verschleiß der Bremse in der Regel der Bremsweg verlängert, in aller Regel negativ sein, so dass der Auslösepunkt um den festen Korrekturwert nach vorne verschoben wird. Eine solche Ausgestaltung ist insbesondere dann von Vorteil, wenn die vorhandene Einrichtung zur Bestimmtung der Ist-Ruheposition durch technische Rahmenbedingungen nicht quantitativ ermitteln kann, wie weit Ist- und Soll-Ruheposition auseinanderliegen, sondern nur bestimmen kann, dass das bewegte Maschinenteil nicht in der korrekten Soll-Ruheposition ist, sondern diese im Rahmen der aktuellen Arbeitsbewegung bereits passiert hat oder noch nicht passiert hat. Eine solche Einrichtung ist z.B. eine Kontaktpunktmessung in der Soll-Ruheposition. In diesem Fall kann nur auf die Richtung der Korrektur geschlossen werden.

In einer zweiten vorteilhaften Ausgestaltung erfolgt das Korrigieren, indem aus der Positionsdifferenz ein dynamischer Korrekturwert für den Auslösepunkt ermittelt wird und der Auslösepunkt um den dynamischen Korrekturwert verschoben wird. Dies kann erfolgen, wenn die Einrichtung zur Bestimmung der Positionsdifferenz auch quantitative Werte liefert, d.h. einen konkreten Ortsabstand zwischen Soll-und Ist-Position. Mit anderen Worten: Die quantifizierte Positionsdifferenz dient dazu, z.B. auf Basis von hinterlegten Parametern zur Maschine quantitativ einen Korrekturwert zu ermitteln, der den Auslösepunkt nach vor oder zurück verschiebt. Dieser Korrekturwert ist dynamisch, d.h. seine Höhe wird in jedem Zyklus neu bestimmt, und kann -je nach Richtung der Positionsdifferenz - wiederum positiv oder negativ sein. Er wird dann zum Auslösepunkt hinzuaddiert. Bei der dynamischen Berechnung des Grenzwertes kann durchaus auch ein minimale Grenzwert für die Positionsdifferenz definiert sein, ab der erst eingegriffen wird, so dass keine dauernde Regelung bei kleinsten Abweichungen erfolgt. Ebenso kann eine Hysterese definiert werden.

In weiterer vorteilhafter Ausgestaltung wird weiterhin während des Abbremsens ein Geschwindigkeitsprofil ermittelt, und der dynamische Korrekturwert für den Auslösepunkt wird zusätzlich aus dem Geschwindigkeitsprofil ermittelt. Der dynamische Wert aollte hier also nicht nur von der Positionsdifferenz, sondern auch von dem gemessenen Geschwindigkeitsprofil, d.h. insbesondere auch der aktuellen Geschwindigkeit zum Zeitpunkt des Bremsens abhängen. Auch kann insbesondere ein Geschwindigkeitsprofil mehrerer zurückliegender Bremsvorgänge aufgenommen und statistisch ausgewertet werden. Diese Auswertung kann ebenfalls in die Korrektur des Auslösepunktes einfließen.

In einer weiteren, zusätzlichen oder alternativen vorteilhaften Ausgestaltung des Verfahrens ist der Auslösepunkt als Auslösezeit definiert. Der Korrekturwert ist dann vorteilhafterweise eine Korrekturzeit. In einer derartigen Ausgestaltung ist ein fester Zeitpunkt, z.B. eine bestimmte Anzahl von Millisekunden nach Start der Arbeitsbewegung oder nach Erreichen einer bestimmten Arbeitsposition vorgegeben, zu dem die Bremsvorrichtung ausgelöst wird. Die Auslösezeit wird dann im Rahmen der Korrektur zeitlich vor- oder zurückverlegt.

In dazu alternativer vorteilhafter Ausgestaltung ist der Auslösepunkt als Auslösewinkel eines Antriebs der Maschine definiert. Dabei ist der Korrekturwert vorteilhafterweise ein Korrekturwinkel. In dieser Ausgestaltung wird die Bremswirkung bei Erreichen einer bestimmten Winkelposition z.B. des Exzenter- oder Schwungrades ausgelöst. Der Korrekturwert ist als Winkel definiert, so dass die Bremswirkung mit Korrektur dann bereits zu einem früheren oder späteren Winkel auslöst. Die Winkelmessung kann dabei durch einen sicheren Drehgeber/Encoder erfolgen.

In allen Ausgestaltungen ist der Auslösepunkt vorteilhafterweise abhängig von einer Geschwindigkeit der Arbeitsbewegung. Die Arbeitsbewegung kann nämlich ggf. mit unterschiedlicher Geschwindigkeit erfolgen. Je nach Geschwindigkeit wird kann in der Steuerungseinheit eine Abhängigkeit des Auslösepunkts von der Geschwindigkeit hinterlegt sein. Vorteilhafterweise sind in diesem Fall auch die Korrekturwerte von der Geschwindigkeit der Arbeitsbewegung abhängig. Ein vorbestimmter Korrekturwert könnte z.B. eine ebensolche Abhängigkeit von einer Geschwindigkeit aufweisen. Bei einem dynamisch berechneten Korrekturwert würde die Geschwindigkeit bei dessen Ermittlung/Berechnung eingehen.

Wie oben beschrieben ist Veränderung der Bremswirkung häufig insbesondere auf einen Verschleiß der Bremsen zurückzuführen. Allerdings können auch andere technische Gegebenheiten dazu führen, dass der Auslösepunkt in der beschriebenen Weise korrigiert wird. Hierbei kann es problematisch sein, dass z.B. ein überhöhter Verschleiß durch die automatische Korrektur des Auslösepunkts nicht oder erst vergleichsweise spät erkannt wird. Zur Lösung dieses Problems wird vorteilhafterweise ein erster Grenzwert für den Gesamtkorrekturwert vorgegeben, wobei eine Benutzerwarnung ausgegeben wird, wenn der Gesamtorrekturwert den ersten Grenzwert überschreitet. Unter dem Gesamtkorrekturwert wird hierbei die Summe aller im Rahmen des beschriebenen Verfahrens ermittelten Korrekturwerte verstanden, d.h. der Unterschied des aktuellen Werts des Auslösepunkts zum Wert des Auslösepunkt bei erstmaliger Inbetriebnahme. Der Begriff Überschreiten wird hier und im Folgenden betragsmäßig verstanden, d.h. unabhängig von der Richtung der Korrektur. Der Grenzwert wird in der Steuerungseinheit hinterlegt und die Steuerungseinheit überwacht so, wie weit die vorgenommene Korrektur bereits geht. Bei Überschreiten des Grenzwerts gibt die Steuereinheit eine Benutzerwarnung z.B. auf einem Bediendisplay aus. Die kann z.B. einer vorbeugenden Wartung der Maschine dienen.

Da die Bedienung der eingangs beschriebenen Maschinen in der Regel Gefahr für Mensch und Material birgt, ist es darüberhinaus vorteilhaft, wenn ein zweiter Grenzwert für den Gesamtkorrekturwert vorgegeben wird, wobei die Maschine in einen sicheren Zustand überführt wird, wenn der Gesamtkorrekturwert den zweiten Grenzwert überschreitet. D.h., es wird ein Grenzwert vorgegeben, bei dem davon auszugehen ist, dass bei Überschreitung durch den Gesamtkorrekturwert möglicherweise Gefahr für Mensch und Maschine bestehen könnte. In diesem Fall wird keine Warnung ausgegeben, sondern die Maschine direkt in einen vorab definierten, funktional sicheren Zustand gebracht, d.h. in der Regel wird die Arbeitsbewegung sofort angehalten bzw. sichergestellt, dass sie nicht mehr ausgeführt werden kann.

Vorteilhafterweise ist der zweite Grenzwert, bei dem der sichere Zustand ausgelöst wird, höher als der erste Grenzwert, bei dem lediglich eine Benutzerwarnung ausgegeben wird. So wird bei allmählicher Erhöhung des Gesamtkorrekturwertes zuerst die Benutzerwarnung ausgelöst, und erst zu einem späteren Zeitpunkt, bei weiterer betragsmäßiger Erhöhung des Gesamtkorrekturwertes, ein sicherer Zustand eingenommen.

Eine Steuerungseinheit für eine Maschine ist vorteilhafterweise zum Ausführen des beschriebenen Verfahrens ausgebildet. Dafür weist diese Steuerungseinheit z.B. einen Mikroprozessor auf, auf dem eine entsprechende Firmware abläuft, so dass das Verfahren entsprechend durch die Steuerungseinheit ausgeführt wird.

Das eingangs beschriebene Maschinen wie z.B. Pressen in der Regel funktional sicher auszulegen sind, ist die Steuerungseinheit weiterhin vorteilhafterweise zum gemäß einer Sicherheitsnorm funktional sicheren Steuern der Maschine ausgebildet. Der Begriff funktionale Sicherheit bezeichnet hierbei die Sicherstellung einer störungsfreien und insbesondere gefahrenfreien Funktion der Maschine im Unterschied zu anderen Sicherheitsmaßnahmen wie elektrischer Sicherheit, Brand- und Strahlenschutz etc. wird dies. Wichtige Normen im Bereich der funktionalen Sicherheit sind beispielsweise die IEC 61508, die EN 62061 und die EN ISO 13849-1. Sie spezifizieren bestimmte Prinzipien der Ausgestaltung der Steuerungseinheit wie beispielsweise überwachte Redundanz.

Ein System umfasst vorteilhafterweise eine derartige Steuerungseinheit und eine mit der Steuerungseinheit datenseitig verbundene Nachlaufmesseinrichtung mit Mitteln zum Ermitteln der Ist-Ruheposition nach dem Abbremsen. Ermitteln der Ist-Ruheposition wird hier - wie oben beschrieben - so verstanden, dass zumindest die Richtung der Ist-Ruheposition gegenüber der Soll-Ruheposition zu ermitteln ist. Besonders vorteilhaft kann die beschriebene Nachlaufmesseinrichtung diesen Positionsunterschied auch quantifizieren. Vorteilhafterweise ist Nachlaufmesseinrichtung ebenfalls nach einer beschriebenen Sicherheitsnorm funktional sicher ausgebildet.

Eine Maschine, bei der ein erstes Maschinenteil aus einer Ruheposition eine Arbeitsbewegung gegen ein zweites Maschinenteil ausführt, umfasst vorteilhafterweise ein derartiges System.

Die mit der Erfindung erzielten Vorteile bestehen insbesondere darin, dass durch eine kontinuierliche automatisierte Nachregelung der Auslösepunkts der Bremsvorrichtung in einer Maschine wie z.B. einer Presse eine manuelle Nachjustage vermieden und der Wartungsaufwand vermindert wird. Die automatisierte Nachregelung kann, da in einer derartigen Maschine häufig hardwareseitig eine Überwachungsmöglichkeit für die Position am oberen Totpunkt vorliegt, ggf. durch reine softwareseitige Maßnahmen realisiert werden und ist daher ohne hardwareseitigen Konstruktionsaufwand realisierbar. Ferner können die Maschinenstillstände vermieden werden, indem eine vorbeugende Wartung von Verschleißteilen bzw. Bremsen vorgenommen wird.

Ausführungsbeispiele der Erfindung werden anhand von Zeichnungen näher erläutert. Darin zeigen:
- FIG 1: eine Prinzipskizze einer Presse,
- FIG 2: ein Ablaufdiagramm eines Verfahrens zur automatischen Nachregelung der Auslösepunkts für die Bremsvorrichtung.

Gleiche Teile sind in allen Zeichnungen mit denselben Bezugszeichen versehen.

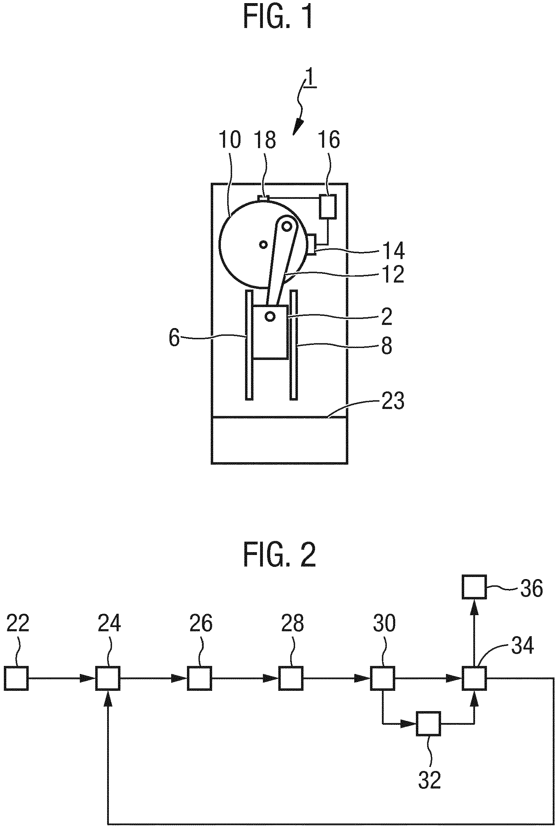

FIG 1 zeigt schematisch eine Maschine 1, die als Presse ausgebildet ist. In der Maschine 1 wird ein erstes Maschinenteil 2, der Bär, gegen ein zweites Maschinenteil 4 bewegt, welches als fixierte Auflagefläche ausgebildet ist. Der Bär ist dabei in Führungselementen 6, 8 geführt, so dass ausschließlich eine lineare Auf- und Abbewegung möglich ist. Der Antrieb des Bären erfolgt über ein Schwungrad 10, dessen Rotationsbewegung über ein Pleuel 12 in die Liniearbewegung des Bären übertragen wird.

Die Arbeitsbewegung des Bären beginnt aus einer Ruheposition heraus, in der Bär an einem weit entfernten Punkt von der Auflagefläche ist. Die Arbeitsbewegung beginnt durch Einkuppeln an einen nicht näher dargestellten Antrieb, so dass sich das Schwungrad bewegt. Die Arbeitsbewegung besteht idealerweise aus einer 360°-Bewegung des Schwungrads 10. Dabei wird ab einem gegebenen Auslösepunkt, der alternativ als Auslösezeit oder als Auslösewinkel definiert sein kann, eine Bremsvorrichtung 14 aktiviert, so dass das Schwungrad 10 wieder in der ursprünglichen Ruheposition stoppt. Die Bremsvorrichtung 14 kann z.B. mit Federkraft betrieben sein. Der nicht näher gezeigte Antrieb wird beim Bremsvorgang wieder ausgekuppelt. Die gesamte Arbeitsbewegung wird durch eine Steuerungseinheit 16 gesteuert.

Durch z.B. Materialverschleiß kann es bei gegebenem Auslösewinkel jedoch dazu kommen, dass sich die Ruheposition nach einer gewissen Anzahl von Arbeitsbewegungen verschiebt. Damit hier keine manuelle Nachjustage erforderlich ist, weist die Maschine 1 im Bereich des oberen Totpunkts eine Nachlaufmesseinrichtung 18 auf, die datenseitig mit der Steuerungseinheit 16 verbunden ist und in Ausführungsbeispielen unterschiedlich ausgebildet sein kann: In einem einfacheren Ausführungsbeispiel weist die Nachlaufmesseinrichtung 18 einen einzelnen Kontakt auf, der lediglich ermitteln kann, ob und in welche Richtung die Ist-Ruheposition des Schwungrads 10 nach der Arbeitsbewegung gegenüber der Soll-Ruheposition verschoben ist. In einem elaborierteren Ausführungsbeispiel ist die Nachlaufmesseinrichtung 18 dafür ausgebildet, darüber hinaus auch den Abstand der Ist-Ruheposition von der Soll-Ruheposition zu ermitteln.

Durch das im Folgenden anhand von FIG 2 dargestellte Verfahren 20 erfolgt nun eine automatische Korrektur des Auslösepunkts des Bremsvorgangs. Zunächst wird in der Steuerungseinheit 16 einmalig eine Soll-Ruheposition vorgegeben 22. Sodann erfolgt zyklisch, im Ausführungsbeispiel nach jeder oben beschriebenen Arbeitsbewegung, eine Ermittlung der Ist-Ruheposition 24 mittels der Nachlaufmesseinrichtung 18, aus der eine Positionsdifferenz zwischen Ist und Soll ermittelt wird 26. Diese kann - wie bereits beschrieben - entweder nur die Richtung, oder aber Richtung und Größe der Abweichung zwischen Ist- und Soll-Ruheposition umfassen.

Wird eine Abweichung festgestellt, so wird der Auslösepunkt um einen Korrekturwert verschoben 28. Im oben erläuterten einfacheren Ausführungsbeispiel, in dem nur die Richtung der Verschiebung bekannt ist, wird daber ein fester Korrekturwert, der in der Steuerungseinheit 16 hinterlegt ist, verwendet und nur die Richtung der Korrektur abhängig von der Richtung der Positionsdifferenz dynamisch bestimmt. Im alternativen Ausführungsbeispiel, in dem die Nachlaufmesseinrichtung 18 auch quantitative Werte für die Positionsdifferenz ermittelt, können - basierend auf hinterlegten Parametern der Maschine 1 - Richtung und Größe des Korrekturwertes ermittelt werden. In einer weiteren Ausführungsform kann die Nachlaufmesseinrichtung 18 zusätzlich noch ein Geschwindigkeitsprofil des Abbremsvorgangs ermitteln und Richtung und Größe des Korrekturwertes basieren zusätzlich auf diesem Geschwindigkeitsprofil oder einer statistischen Auswertung der Geschwindigkeitsprofile mehrerer vorangegangener Abbremsvorgänge.

Je nach oben beschriebener Definition des Auslösepunktes als Winkel oder Zeit ist auch der Korrekturwert entsprechend definiert. Ist in einzelnen Ausführungsbeispielen das Antriebsmoment des Schwungrads 10 und damit die Maximalgeschwindigkeit des Bären variabel, so können sowohl Auslösepunkt als auch der Korrekturwert entsprechend von der Maximalgeschwindigkeit abhängen.

Schließlich erfolgt eine erste Überprüfung des Gesamtkorrekturwertes 30, d.h. der Summe aller in allen Zyklen ermittelten Korrekturwerte, anhand eines vorgegebenen Grenzwertes. Liegt dieser Gesamtkorrekturwert oberhalb des Grenzwertes wird eine Benutzerwarnung ausgegeben 32, z.B. als Warnanzeige auf einem nicht näher dargestellten Bildschirm.

Anschließend, oder falls der Gesamtkorrekturwerts unterhalb des Grenzwerts liegt, erfolgt eine zweite Überprüfung des Gesamtkorrekturwerts 34 anhand eines zweiten, im Ausführungsbeispiel höheren Grenzwerts. Ist auch dieser Grenzwert überschritten, wird die Maschine 1 sofort in einen sicheren Zustand überführt 36. Andernfalls ist der Zyklus beendet und fährt nach einer neuen Arbeitsbewegung wieder erneut mit der Ermittlung der Ist-Ruheposition 24 fort.

Da die oben beschriebenen Schritte funktional sicher ausgeführt werden sollten, ist die Steuerungseinheit 16 im Ausführungsbeispiel nach einer Sicherheitsnorm funktional sicher ausgestaltet.

### Bezugszeichenliste

- 1: Maschine
- 2, 4: Maschinenteil
- 6, 8: Führungselement
- 10: Schwungrad
- 12: Pleuel
- 14: Bremsvorrichtung
- 16: Steuerungseinheit
- 18: Nachlaufmesseinrichtung
- 20: Verfahren
- 22: Vorgabe der Soll-Ruheposition
- 24: Ermittlung der Ist-Ruheposition
- 26: Ermittlung der Positionsdifferenz
- 28: Verschieben des Auslösepunktes durch Korrekturwert
- 30: erste Überprüfung des Gesamtkorrekturwertes
- 32: Ausgabe einer Benutzerwarnung
- 34: zweite Überprüfung des Gesamtkorrekturwertes
- 36: Überführen in sicheren Zustand

## Patentansprüche

1. Verfahren (20) zur Steuerung einer Maschine (1), bei der ein erstes Maschinenteil (2) aus einer Ruheposition eine Arbeitsbewegung gegen ein zweites Maschinenteil (4) ausführt und zum Wiedererreichen der Ruheposition die Arbeitsbewegung abgebremst wird, wobei das Abbremsen mittels Betätigung einer Bremsvorrichtung (14) durch eine Steuerungseinheit (16) an einem Auslösepunkt erfolgt, wobei
eine Soll-Ruheposition vorgegeben wird (22), und
zyklisch während der Arbeitsbewegungen die Steuerungseinheit (16) eine Ist-Ruheposition nach dem Abbremsen ermittelt (24), und anhand einer Positionsdifferenz zwischen Soll-Ruheposition und Ist-Ruheposition durch die Steuerungseinheit der Auslösepunkt korrigiert wird (26, 28).

2. Verfahren (20) nach Anspruch 1, bei dem das Korrigieren erfolgt, indem aus der Positionsdifferenz eine Richtung des Korrigierens des Auslösepunkts ermittelt wird (26) und die der Auslösepunkt um einen festen, vorbestimmten Korrekturwert in die ermittelte Richtung verschoben wird (28).

3. Verfahren (20) nach Anspruch 1, bei dem das Korrigieren erfolgt, indem aus der Positionsdifferenz ein dynamischer Korrekturwert für den Auslösepunkt ermittelt wird (26) und der Auslösepunkt um den dynamischen Korrekturwert verschoben wird (28).

4. Verfahren (20) nach Anspruch 3, bei dem die Steuerungseinheit (16) weiterhin während des Abbremsens ein Geschwindigkeitsprofil ermittelt, und der dynamische Korrekturwert für den Auslösepunkt zusätzlich aus dem Geschwindigkeitsprofil ermittelt wird (26).

5. Verfahren (20) nach einem der Ansprüche 1 bis 4, bei dem der Auslösepunkt als Auslösezeit definiert ist.

6. Verfahren (20) nach Anspruch 2, 3 oder 4 und Anspruch 5, bei dem der Korrekturwert eine Korrekturzeit ist.

7. Verfahren (20) nach nach einem der Ansprüche 1 bis 4, bei dem der Auslösepunkt als Auslösewinkel eines Antriebs (10) der Maschine (1) definiert ist.

8. Verfahren (20) nach Anspruch 2, 3 oder 4 und Anspruch 7, bei dem der Korrekturwert ein Korrekturwinkel ist.

9. Verfahren (20) nach einem der vorhergehenden Ansprüche, bei dem der Auslösepunkt abhängig von einer Geschwindigkeit der Arbeitsbewegung ist.

10. Verfahren (20) nach einem der vorhergehenden Ansprüche, bei dem ein erster Grenzwert für den Gesamtkorrekturwert vorgegeben wird, wobei eine Benutzerwarnung ausgegeben wird, wenn der Gesamtkorrekturwert den ersten Grenzwert überschreitet (30, 32).

11. Verfahren (20) nach einem der vorhergehenden Ansprüche, bei dem ein zweiter Grenzwert für den Gesamtkorrekturwert vorgegeben wird, wobei die Maschine in einen sicheren Zustand überführt wird, wenn der Gesamtkorrekturwert den zweiten Grenzwert überschreitet (34, 36), wobei der zweite Grenzwert vorteilhafterweise höher als der erste Grenzwert ist.

12. Steuerungseinheit (16) für eine Maschine (1), ausgebildet zum Ausführen des Verfahrens (20) nach einem der vorhergehenden Ansprüche.

13. Steuerungseinheit (16) nach Anspruch 12, ausgebildet zum gemäß einer Sicherheitsnorm funktional sicheren Steuern der Maschine (1).

14. System, umfassend eine Steuerungseinheit (16) nach Anspruch 12 oder 13 und eine mit der Steuerungseinheit (16) datenseitig verbundene Nachlaufmesseinrichtung (18) mit Mitteln zum Ermitteln der Ist-Ruheposition nach dem Abbremsen und/oder eines Geschwindigkeitsprofils beim Abbremsen.

15. Maschine (1), bei der ein erstes Maschinenteil (2) aus einer Ruheposition eine Arbeitsbewegung gegen ein zweites Maschinenteil (4) ausführt, mit einem System nach Anspruch 14.
